# EUROPÄISCHE PATENTSCHRIFT

(11) **EP 0 680 460 B1**
(45) Veröffentlichungstag und Bekanntmachung des Hinweises auf die Patenterteilung: **16.10.1996**
(21) Anmeldenummer: 94903731.1
(22) Anmeldetag: 05.01.1994
(51) Int. Cl.: C04B 35/14, C04B 35/66, C10B 29/02

(54) **QUARZGUT-FERTIGBAUTEIL FÜR ANWENDUNGEN IM FF-BEREICH UND VERFAHREN ZUR HERSTELLUNG DERARTIGER FERTIGBAUTEILE**
PREFABRICATED PART MADE OF VITREOUS FUSED SILICA FOR USE AS A REFRACTORY AND PROCESS FOR PRODUCING SUCH PREFABRICATED PARTS
ELEMENT PREFABRIQUE EN SILICE FONDUE A UTILISER DANS LE DOMAINE DES REFRACTAIRES ET PROCEDE DE FABRICATION D'UN TEL ELEMENT

(30) Priorität: 23.01.1993 DE 4301846
(43) Veröffentlichungstag der Anmeldung: 08.11.1995
(73) Patentinhaber: SOLLAC, F-92800 Puteaux (FR); LICHTENBERG FEUERFEST GMBH, D-40549 Düsseldorf (DE)
(72) Erfinder: DELCLOY, Jean-Marie, F-62100 Calais (FR); LEROY, Jean-Marie, F-59240 Dunkerque (FR); GOERENZ, Edmund, D-5110 Alsdorf-Hoengen (DE)
(74) Vertreter: Bauer, Wulf, Dr.
(86) Internationale Anmeldenummer: DE9400004
(87) Internationale Veröffentlichungsnummer: WO9417009

(56) Entgegenhaltungen:
- EP-A- 0 007 646
- EP-A- 0 032 602
- FR-A- 2 429 762
- GB-A- 1 290 798

## Beschreibung

Die Erfindung bezieht sich auf ein Quarzgut-Fertigbauteil nach dem Oberbegriff des Patentanspruchs 1 sowie auf ein Verfahren zur Herstellung eines derartigen Fertigbauteils.

Aus der deutschen Offenlegungsschrift 29 47 182 ist ein feuerfestes Steinmaterial für Koksöfen der eingangs genannten Art bekannt. Es besteht überwiegend aus SiO₂ und einem Binder, es eignet sich für formgegossene Steine und vorzugsweise für einstückig hergestellte Koksofenwände.

Fertigbauteile der eingangs genannten Art lassen sich allgemein im ff-Bereich einsetzen. In der keramischen Industrie werden sie beispielsweise als Brennhilfsmittel gebraucht, in der Glasindustrie werden sie für Bereiche eingesetzt, die nicht in Kontakt mit dem geschmolzenen Glas stehen, z. B. als Vorhangsteine.

Bei Einsatz der Quarzgut-Fertigbauteil der eingangs genannten Art in Koksöfen wird ein möglichst geringes Druckfließverhalten bei hoher Temperatur erwünscht. Im praktischen Betrieb werden Trennwände von Koksöfen, die aus Quarzgut-Fertigbauteilen der eingangs genannten Art gemauert sind, von oben druckbelastet, u. a. durch das Gewicht des vollen Füllwagens. Weiterhin soll die Temperaturwechselbeständigkeit der Fertigbauteil möglichst gut sein. Beim praktischen Betrieb kommen die heißen Trennwände bei jeder Charge erneut in Kontakt mit kalter, nasser Kohle, beim Dechargieren tritt ein Kaltluftschock auf. Darüberhinaus soll der Abrieb der Fertigbauteil gering sein. Schließlich wird für die Fertigbauteil bei Verwendung für Koksöfen ein guter Wärmeübergang, also eine möglichst hohe Wärmeleitfähigkeit gefordert.

Hier setzt nun die Erfindung ein. Sie hat es sich zur Aufgabe gemacht, das Quarzgut-Fertigbauteil der eingangs genannten Art unter Beachtung der oben genannten Anforderungen so weiterzuentwickeln, daß es sich günstig und schnell herstellen läßt und einen möglichst großen Anteil an amorphem SiO₂ enthält.

Gelöst wird diese Aufgabe durch ein Quarzgut-Fertigbauteil, das dadurch gekennzeichnet ist, dap es zusammengesetzt ist aus 20 bis 50 Gewichtsprozent Quarzgut mit einem Korn von 1 bis 6 mm, 20 bis 40 Gewichtsprozent Quarzgut mit einem Korn von 0,1 bis 1 mm, 15 bis 35 Gewichtsprozent eines Quarzgut-Feinmehls, bei dem 100 % der Körner kleiner als 0,1 mm sind, 1 bis 10 % eines Quarzgut-Feinstmehls mit einer spezifischen Oberfläche nach BET größer als 20 m² pro Gramm, 1 bis 10 Gewichtsprozent Zement und 0,1 bis 8 Gewichtsprozent einer phosphorhaltigen Verbindung, insbesondere Natriumpolyphosphat.

Verfahrensmäßig wird die Aufgabe dadurch gelöst, daß bei vier Quarzgut-Fraktionen, der Zement und die phosphorhaltige Verbindung zunächst trocken gemischt werden, danach 5 bis 10 %, vorzugsweise 7 % des Gewichtes der Trockenmischung als Anmachwasser zugegeben und mehrere Minuten, vorzugsweise 5 Minuten innig gemischt wird, danach wird das breiartige Material in eine Form eingefüllt.

Die phosphorhaltige Verbindung und der Zement liefern ein Bindesystem, in dem sich das ff-Gerüst aus den vier Quarzgut-Fraktionen befindet. Der Bindemittelanteil ist bewußt gering gehalten, um einen möglichst hohen SiO₂-Gehalt des Fertigbauteils erreichen zu können. Die erfindungsgemäße Mischung für ein Fertigbauteil wird im englischen als "low cement castable" bezeichnet. Die Mischung aus den vier Quarzgut-Fraktionen führt zu einem einerseits festen und andererseits ausreichend gefüllten Volumen. Die Festigkeit wird durch die relativ großen Körner im Körnungsband 1 bis 6 mm erreicht. Das Feinstmehl ist hochdispers und kugelig, es bewirkt ähnlich einem Schmiermittel eine besonders gute Vermengung der Quarzgut-Fraktionen. Das Feinmehl und das Quarzgut im Körnungsband 0,1 bis 1 mm füllen die Räume zwischen dem Grobkorn, also dem Quarzgut mit dem Körnungsband 1 bis 6 mm, so daß im wesentlichen haarfeine Kapillaren und keine größeren Hohlräume zwischen den Quarzgut-Körnern des Fertigbauteils verbleiben. Das Bindesystem aus dem Zement und der phosphorhaltigen Verbindung, die vorzugsweise ein Natrium-Polyphosphat ist, ist so ausgewählt und bemessen, daß die Fertigbauteil eine ausreichende Festigkeit haben, die für das Entformen, den Transport und die Erstellung einer Trennmauer unter Zwischenlage von Mörtelschichten ausreicht. Sobald die Fertigbauteil danach auf Betriebstemperatur gebracht werden, setzt ein Sintervorgang ein, der die Quarzgutfraktionen bindet, so daß das Bindemittel aus Zement und der phosphorhaltigen Verbindung dann im Grunde nicht mehr nötig ist.

Die erfindungsgemäß hergestellten Quarzgut-Fertigbauteil weisen eine Rohdichte von größer als 1,7 g pro cm³, vorzugsweise größer als 1,8 g pro cm³ auf. Die offene Porosität liegt unter 18 Volumenprozent, vorzugsweise unter 14 Volumenprozent. Die Fertigbauteil zeigen eine hervorragende Kaltdruckfestigkeit. Sie ist größer als 30 MPa im gesamten Temperaturbereich zwischen 110 °C und 1500 °C. Die Druckfestigkeit im Temperaturbereich zwischen 1000 °C und 1200 °C liegt oberhalb von 60 MPa.

Auch das Druckfließverhalten ist für die Verwendung in Koksöfen-Trennwänden günstig. Bei 1200 °C konnte unter einer Belastung von 0,5 MPa zwischen der fünften und der fünfundzwanzigsten Stunde kein Druckfließen gemessen werden. Der Abrieb entspricht der ASTM-Norm.

Die erfindungsgemäßen Quarzgut-Fertigbauteil haben die Eigenschaften von reinem Quarzgut, die Herstellung ist jedoch aufgrund des zusätzlichen Bindesystems günstiger und deutlich schneller. Die Fertigbauteil sind im wesentlichen thermisch neutral, haben also praktisch keine thermische Ausdehnung, insbesondere im Bereich von 1000 °C ist ihre Wärmedehnung praktisch null. Bei der Herstellung der Fertigbauteil muß darauf geachtet werden, daß möglichst wenig Verunreinigungen eingebracht werden. Durch Verunreinigungen könnten die Feuerfest-Qualitäten heruntergesetzt werden, ebenso würden die physikalischen Eigenschaften beeinflußt.

Als Zement wird ein möglichst hochwertiger Zement eingesetzt, insbesondere ein Ca-Aluminat, das typischerweise 80 Gewichtsprozent Al₂O₃ und 20 Gewichtsprozent CaO aufweist.

Erfindungsgemäß lassen sich Fertigbauteile herstellen, wie sie in der deutschen Patentanmeldung P 42 44 547.7 beschrieben sind.

Chemisch lassen sich die erfindungsgemäßen Quarzgut-Fertigbauteil wie folgt charakterisieren:

| | |
|---|---|
| SiO₂ | 92 bis 99,5 % |
| Al₂O₃ | 0,1 bis 8,0 % |
| Fe₂O₃ | max. 0,2 % |
| P₂O₅ | 0,01 bis 1,0 % |
| CaO | 0,1 bis 2,0 % |

Alle Angaben in Gewichtsprozent.

## Patentansprüche

1. Quarzgut-Fertigbauteil für die Verwendung im feuerfester Bereich, insbesondere für die Reparatur von Koksöfen, mit einem Gehalt von über 90 Gewichtsprozent an SiO₂, dadurch gekennzeichnet, daß es zusammengesetzt ist aus 20 bis 50 Gewichtsprozent Quarzgut mit einem Korn von 1 bis 6 mm, 20 bis 40 Gewichtsprozent Quarzgut mit einem Korn von 0,1 bis 1 mm, 15 bis 35 Gewichtsprozent eines Quarzgut-Feinmehls, bei dem 100 % der Körner kleiner als 0,1 mm sind, 1 bis 10 % eines Quarzgut-Feinstmehls mit einer spezifischen Oberfläche nach BET größer als 20 m² pro Gramm, 1 bis 10 Gewichtsprozent Zement und 0,1 bis 8 Gewichtsprozent einer phosphorhaltigen Verbindung, insbesondere Natriumpolyphosphat.

2. Quarzgut-Fertigbauteil nach Anspruch 1, dadurch gekennzeichnet, daß es zusammengesetzt ist aus 25 bis 45 Gewichtsprozent Quarzgut mit einem Korn von 1 bis 6 mm, 25 bis 30 Gewichtsprozent Quarzgut mit einem Korn von 0,1 bis 1 mm, 20 bis 30 Gewichtsprozent eines Quarzgut-Feinmehls, bei dem 100 % der Körner kleiner als 0,1 mm sind, 1 bis 8 % eines Quarzgut-Feinstmehls mit einer spezifischen Oberfläche nach BET größer als 20 m² pro Gramm, 1 bis 8 Gewichtsprozent Zement und 0,1 bis 5 Gewichtsprozent einer phosphorhaltigen Verbindung, insbesondere Natriumpolyphosphat.

3. Quarzgut-Fertigbauteil nach Anspruch 1 oder 2, dadurch gekennzeichnet, daß es zusammengesetzt ist aus 30 bis 44 Gewichtsprozent Quarzgut mit einem Korn von 1 bis 6 mm, 28 bis 32 Gewichtsprozent Quarzgut mit einem Korn von 0,1 bis 1 mm, 22 bis 36 Gewichtsprozent eines Quarzgut-Feinmehls, bei dem 100 % der Körner kleiner als 0,1 mm sind, 3 bis 6 % eines Quarzgut-Feinstmehls mit einer spezifischen Oberfläche nach BET größer als 20 m² pro Gramm, 2 bis 6 Gewichtsprozent Zement und 0,1 bis 3 Gewichtsprozent einer phosphorhaltigen Verbindung, insbesondere Natrium-polyphosphat.

4. Quarzgut-Fertigbauteil nach einem der Ansprüche 1 bis 3, dadurch gekennzeichnet, daß seine Trockendichte größer als 1,7 g pro cm³, vorzugsweise größer als 1,8 g pro cm³ beträgt.

5. Quarzgut-Fertigbauteil nach einem der Ansprüche 1 bis 4, dadurch gekennzeichnet, daß die offene Porosität kleiner als 18 Volumenprozent, insbesondere kleiner als 14 Volumenprozent ist.

6. Quarzgut-Fertigbauteil nach einem der Ansprüche 1 bis 5, dadurch gekennzeichnet, daß die Kaltdruckfestigkeit größer als 30 MPa im Temperaturbereich zwischen 100 °C und 1500 °C beträgt, insbesondere größer als 60 MPa im Temperaturbereich zwischen 1000 °C und 1200 °C ist.

7. Quarzgut-Fertigbauteil nach einem der Ansprüche 1 bis 6, dadurch gekennzeichnet, daß als Zement ein Kalzium-Aluminat verwendet wird, der vorzugsweise 80 Gewichtsprozent Al₂O₃ und 20 Gewichtsprozent CaO enthält.

8. Verfahren zur Herstellung eines Quarzgut-Fertigbauteils nach einem der Ansprüche 1 bis 7, dadurch gekennzeichnet, daß die vier Quarzgut-Fraktionen, der Zement und die phosphorhaltige Verbindung zunächst trocken gemischt werden, danach 5 bis 10 %, vorzugsweise 7 % des Gewichtes der Trockenmischung als Anmachwasser zugegeben und mehrere Minuten, vorzugsweise 5 Minuten innig gemischt wird, danach wird das breiartige Material in eine Form eingefüllt.

9. Verfahren nach Anspruch 8, dadurch gekennzeichnet, daß die Formgebung durch Vibrokompaktieren erfolgt.

10. Verfahren nach Anspruch 8 oder 9, dadurch gekennzeichnet, daß die gefüllten Formen über mehrere Stunden, vorzugsweise 12 bis 24 Stunden bei 400 °C getrocknet werden, wobei die angegebene Trocknungszeit bezogen ist auf die Zeit, in der die Form zumindest 400 °C an Temperatur hat.

11. Verfahren nach Anspruch 10, dadurch gekennzeichnet, daß die Formen so langsam hochgeheizt werden, daß sich die Oberfläche nicht schließt, bevor das Wasser ausgetreten ist, so daß das fertiggestellte Fertigbauteil zur Oberfläche hin offene Kapillaren aufweist.

## Claims

1. Precast element of fused quartz for application at very high temperatures, in particular for repair of coke ovens, with a content of over 90 percent in weight SiO₂, characterised in that it is composed of 20 to 50 percent in weight of quartz with a grain size from 1 to 6 mm, 20 to 40 percent in weight of quartz with a grain size from 0.1 to 1 mm, 15 to 35 percent in weight of finely-ground quartz with 100 % of the grains being smaller than 0.1 mm, 1 to 10% of pulverized quartz with a specific surface area according to BET greater than 20 m² per gramme, 1 to 10 percent in weight of cement and 0.1 to 8 percent in weight of a phosphoric compound, in particular sodium polyphosphate.

2. Precast element of fused quartz according to Claim 1, characterised in that it is composed of 25 to 45 percent in weight of quartz with a grain size from 1 to 6 mm, 25 to 30 percent in weight of quartz with a grain size from 0.1 to 1 mm, 20 to 30 percent in weight of finely-ground quartz with 100% of the grains being smaller than 0.1 mm, 1 to 8% of pulverized quartz with a specific surface area according to BET greater than 20 m² per gramme, 1 to 8 percent in weight of cement and 0.1 to 5 percent in weight of a phosphoric compound, in particular sodium polyphosphate.

3. Precast element of fused quartz according to Claim 1 or 2, characterised in that it is composed of 30 to 44 percent in weight of quartz with a grain size from 1 to 6 mm, 28 to 32 percent in weight of quartz with a grain size from 0.1 to 1 mm, 22 to 36 percent in weight of finely-ground quartz with 100% of the grains being smaller than 0.1 mm, 3 to 6% of pulverized quartz with a specific surface area according to BET greater than 20 m² per gramme, 2 to 6 percent in weight of cement and 0.1 to 3 percent in weight of a phosphoric compound, in particular sodium polyphosphate.

4. Precast element of fused quartz according to any of the Claims 1 to 3, characterised in that its dry density is greater than 1.7 g per cm3, preferably greater than 1.8 g per cm³.

5. Precast element of quartz according to any of the Claims 1 to 4, characterised in that the open porosity is under 18 percent in volume, in particular under 14 percent in volume.

6. Precast element of quartz according to any of the Claims 1 to 5, characterised in that the cold compression strength exceeds 30 MPa over the temperature range between 110 °C and 1500 °C, and in particular is greater than 60 MPa in the temperature range between 1000 °C and 1200 °C.

7. Precast element of fused quartz according to any of the Claims 1 to 6, characterised in that a calcium-aluminate is used as cement, preferably containing 80 percent in weight Al₂O₃ and 20 percent in weight CaO.

8. Method for the production of a precast element of fused quartz according to any of the Claims 1 to 7, characterised in that the four fractions of quartz, the cement and the phosphoric compound are first dry mixed, then a quantity of mixing water corresponding to 5 to 10 %, preferably 7 % of the weight of the dry mixture is added and mixed for several minutes, preferably 5 minutes, until homogeneous, then the pasty material is filled into a mould.

9. Method according to Claim 8, characterised in that the moulding is carried out by vibratory compaction.

10. Method according to Claim 8 or 9, characterised in that the filled moulds are dried at 400 °C over a number of hours, preferably 12 to 24 hours, the given drying time being in reference to the length of time in which the mould has a temperature of 400 °C.

11. Method according to Claim 10, characterised in that the moulds are raised to the given temperature slowly enough for the surface not to close before the water has escaped, so that the finished element exhibits capillaries open to the surface.

## Revendications

1. Elément préfabriqué en silice fondue pour utilisation dans la zone réfractaire et notamment pour la réparation de fours à coke, d'une contenance en SiO2 de plus de 90 pourcents pondéraux, caractérisé par le fait qu'il est composé de 20 à 50 pourcents pondéraux de silice fondue d'un grain de 1 à 6 mm, 20 à 40 pourcents pondéraux de silice fondue d'un grain de 0,1 à 1 mm, 15 à 35 pourcents pondéraux d'une poudre fine de silice fondue pour laquelle 100 % des grains ont une taille inférieure à 0,1 mm, 1 à 10 % d'une poudre très fine de silice fondue ayant une surface spécifique suivant BET de plus de 20 m² par gramme, 1 à 10 pourcents pondéraux de ciment et 0,1 à 8 pourcents pondéraux d'un composé phosphoré, notamment du polyphosphate de sodium.

2. Elément préfabriqué en silice fondue suivant spécification 1, caractérisé par le fait qu'il est composé de 25 à 45 pourcents pondéraux de silice fondue d'un grain de 1 à 6 mm, 25 à 30 pourcents pondéraux de silice fondue d'un grain de 0,1 à 1 mm, 20 à 30 pourcents pondéraux d'une poudre fine de silice fondue pour laquelle 100 % des grains ont une taille inférieure à 0,1 mm, 1 à 8 % d'une poudre très fine de silice fondue ayant une surface spécifique suivant BET de plus de 20 m² par gramme, 1 à 8 pourcents pondéraux de ciment et 0,1 à 5 pourcents pondéraux d'un composé phosphoré, notamment du polyphosphate de sodium.

3. Elément préfabriqué en silice fondue suivant les spécifications 1 ou 2, caractérisé par le fait qu'il est composé de 30 à 44 pourcents pondéraux de silice fondue d'un grain de 1 à 6 mm, 28 à 32 pourcents pondéraux de silice fondue d'un grain de 0,1 à 1 mm, 22 à 36 pourcents pondéraux d'une poudre fine de silice fondue pour laquelle 100 % des grains ont une taille inférieure à 0,1 mm, 3 à 6 % d'une poudre très fine de silice fondue ayant une surface spécifique suivant BET de plus de 20 m² par gramme, 2 à 6 pourcents pondéraux de ciment et 0,1 à 3 pourcents pondéraux d'un composé phosphoré, notamment du polyphosphate de sodium.

4. Elément préfabriqué en silice fondue suivant l'une des spécifications 1 à 3, caractérisé par le fait que sa masse volumétrique apparente est supérieure à 1,7 g par cm3, de préférence supérieure à 1,8 g par cm3.

5. Elément préfabriqué en silice fondue suivant l'une des spécifications 1 à 4, caractérisé par le fait que la porosité ouverte est inférieure à 18 pourcents volumétriques, notamment inférieure à 14 pourcents volumétriques.

6. Elément préfabriqué en silice fondue suivant l'une des spécifications 1 à 5, caractérisé par le fait que la résistance à la compression à froid est supérieure à 30 MPa dans le domaine de température compris entre 100°C et 1500°C, notamment supérieure à 60 MPa dans le domaine de température compris entre 1000°C et 1200°C.

7. Elément préfabriqué en silice fondue suivant l'une des spécifications 1 à 6, caractérisé par le fait que le ciment utilisé est un aluminate de calcium contenant de préférence 80 pourcents pondéraux de Al2O3 et 20 pourcents pondéraux de CaO.

8. Procédé de fabrication d'un élément préfabriqué en silice fondue suivant l'une des spécifications 1 à 7, caractérisé par le fait que les 4 fractions de silice fondue, le ciment et le composé phosphoré sont d'abord mélangés à sec, que l'on ajoute par la suite 5 à 10 %, de préférence 7 %, du poids du mélange sec en tant qu'eau à gâcher et que l'on mélange intimement plusieurs minutes, de préférence 5 minutes. Le matériau pâteux est ensuite versé dans un moule.

9. Procédé suivant spécification 8, caractérisé par le fait que le modelage est effectué par compactage par vibration.

10. Procédé suivant spécification 8 ou 9, caractérisé par le fait que les moules remplis sont séchés pendant plusieurs heures, de préférence pendant 12 à 24 heures à 400°C. Le temps de séchage indiqué se rapporte à la durée pendant laquelle le moule est au moins à 400°C.

11. Procédé suivant la spécification 10, caractérisé par le fait que les moules sont chauffés lentement et au fur et à mesure d'une manière telle que la surface ne se ferme pas avant que l'eau ne soit sortie, de sorte que l'élément préfabriqué fini présente des tubes capillaires ouverts vers la surface.
